# EUROPÄISCHE PATENTSCHRIFT

(11) **EP 0 786 764 B1**
(45) Veröffentlichungstag und Bekanntmachung des Hinweises auf die Patenterteilung: **31.03.2004**
(21) Anmeldenummer: 97200139.0
(22) Anmeldetag: 17.01.1997
(51) Int. Cl.: G11B 5/48

(54) **Magnetbandkassettengerät**
Magnetic tape cassette apparatus
Appareil à cassette à bande magnétique

(30) Priorität: 26.01.1996 DE 19602740
(43) Veröffentlichungstag der Anmeldung: 30.07.1997
(73) Patentinhaber: Philips Intellectual Property & Standards GmbH, 20099 Hamburg (DE); Koninklijke Philips Electronics N.V., 5621 BA Eindhoven (NL)
(72) Erfinder: Kunze, Norbert, Röntgenstrasse 24, 22335 Hamburg (DE); Koch, Stefan, Röntgenstrasse 24, 22335 Hamburg (DE)
(74) Vertreter: von Laue, Hanns-Ulrich, Dipl.-Ing.

(56) Entgegenhaltungen:
- EP-A- 0 321 001
- EP-A- 0 337 566
- DE-A- 4 032 637
- GB-A- 2 060 237
- PATENT ABSTRACTS OF JAPAN vol. 17, no. 384 (P-1575), 19.Juli 1993 & JP 05 062292 A (SHARP), 12.März 1993,
- PATENT ABSTRACTS OF JAPAN vol. 4, no. 168 (P-37), 20.November 1980 & JP 55 113146 A (SHARP), 1.September 1980,

## Beschreibung

Die Erfindung betrifft eine Vorrichtung an einem Laufwerk für ein Magnetbandkassettengerät, wobei an einer Magnetkopfhalterung ein Magnetkopf angeordnet ist, wobei die Magnetkopfhalterung an einem an einer Chassisplatte angeordnetem Trägerelement angeordnet ist und wobei der Magnetkopf für verschiedene Betriebsstellungen in verschiedene Positionen bezüglich einer Durchzugsbahn eines Magnetbandes bewegt werden kann.

Eine derartige Vorrichtung an einem Laufwerk ist aus der DE 44 04 687 A1 bekannt. Um Pegelschwankungen bei verschiedenen Betriebsstellungen zu vermeiden, ist es wünschenswert, daß der Magnetkopf im Bereich der Magnetspalte für verschiedene Betriebsstellungen in verschiedenen Positionen etwa parallel zu der Durchzugsbahn des Magnetbandes ausgerichtet ist. Unter paralleler Ausrichtung des Magnetkopfes im Bereich der Magnetspalte zu der Durchzugsbahn des Magnetbandes wird verstanden, daß das Magnetband im Bereich der Magnetspalte des Magnetkopfes etwa parallel zu einer Tangentialebene des Magnetkopfspiegels im Bereich der Magnetspalte am Magnetkopf vorbeigeführt wird.
Insbesondere ist dies bei Laufwerken der Fall, die ein Musiksuchlaufsystem (MSS) aufweisen. Bei derartigen Systemen wird im Musiksuchlaufbetrieb das Magnetband vom Magnetkopf nur leicht berührt, um einen Schnellspulbetrieb zu ermöglichen, bei dem gleichzeitig noch Aufzeichnungslücken auf dem Magnetband erkannt werden können.

Bei der in der DE 44 04 687 beschriebenen Vorrichtung ist der Magnetkopf an einem Trägerelement angeordnet, welches um eine Schwingachse kippbar und gegenüber dem Magnetband verfahrbar ist. Bei diesem Trägerelement mit seiner sehr speziellen Bewegungsfähigkeit wird eine Parallelstellung des Magnetkopfes in verschiedenen Betriebsstellungen dadurch erreicht, daß der Magnetkopf an dem Trägerelement um deren Schwingachse drehbar gelagert ist und durch Gradführungen, die den Magnetkopf unabhängig von der Kippstellung des Trägerelementes stets senkrecht zum Magnetband führen. Als Relativbewegung des Magnetkopfes gegenüber dem Trägerelement ist daher nur eine rein drehende Bewegung möglich. Eine solche Anordnung des Magnetkopfes im Zusammenspiel mit den Gradführungen ist jedoch nur bei Laufwerken mit diesen speziellen Trägerelementen einsetzbar, die um eine Schwingachse kippbar und außerdem gegenüber dem Magnetband verfahrbar sind.
Zudem ist bei einer derartigen Vorrichtung die Bewegung des Trägerelementes und des Magnetkopfes in der Richtung senkrecht zu der Durchzugsrichtung des Magnetbandes starr miteinander gekoppelt. Wird das Trägerelement gleichzeitig noch zur Ansteuerung des Druckrollenmechanismus benutzt, so können hier leicht Toleranzprobleme in der Art auftreten, daß bei Laufwerken mit einem Musiksuchlaufsystem die Druckrolle im Musiksuchlaufbetrieb fehlerhaft noch Kontakt mit der Tonwelle haben kann, da der Magnetkopf für den Musiksuchlaufbetriebn nur um ein begrenztes Maß aus der Kassette herausbewegt werden darf und damit auch die Druckrolle nur um ein begrenztes Maß von der Tonwelle wegbewegt wird. Dies gilt insbesondere für Trägerelemente, die nicht verschoben, sondern um einen festen Drehpunkt verdreht werden, und hier besonders für die Druckrolle, welche näher am Drehpunkt liegt.

Es ist Aufgabe der vorliegenden Erfindung, für eine Vorrichtung der eingangs genannten Art mit verschiedenartigst gelagerten und bewegbaren Trägerelementen eine Möglichkeit zu schaffen, den Magnetkopf im Bereich der Magnetspalte für verschiedene Betriebsstellungen in verschiedenen Positionen parallel zu der Durchzugsbahn des Magnetbandes auszurichten.

Diese Aufgabe ist erfindungsgemäß dadurch gelöst, daß die Magnetkopfhalterung an dem Trägerelement derart in vorgebbaren Grenzen verschwenkbar und im wesentlichen in einer Richtung etwa senkrecht zur Durchzugsbahn des Magnetbandes verschiebbar gelagert ist, daß der Magnetkopf im Bereich der Magnetspalte in wenigstens zwei Positionen parallel zu der Durchzugsbahn des Magnetbandes ausgerichtet ist.

Durch die verschwenkbare und verschiebbare Lagerung der Magnetkopfhalterung an dem Trägerelement wird die Zahl der möglichen Bewegungsverläufe, die die Magnetkopfhalterung gegenüber dem Trägerelement ausführen kann, deutlich erhöht. Die Magnetkopfhalterung kann gegenüber dem Trägerelement radiale Bewegungen, transversale Bewegungen sowie gemischt radial-transversale Bewegungen ausführen. Durch diese größere Freiheit der Bewegungsfähigkeit der Magnetkopfhalterung gegenüber dem Trägerelement wird es ermöglicht, für verschiedenartigst ausgebildete Trägerelemente, die verschiedenartigste Bewegungen in Richtung auf die Durchzugsbahn des Magnetbandes ausführen, im Bereich der Magnetspalte eine parallele Ausrichtung des Magnetkopfes zu der Durchzugsbahn des Magnetbandes in wenigstens zwei Positionen zu realisieren.
Durch die verschiebbare Lagerung der Magnetkopfhalterung ist es möglich, die Bewegung des Trägerelementes in bestimmten Bereichen von der Bewegung des Magnetkopfes zu entkoppeln.
Es wird bemerkt, daß unter verschwenkbar alle Bewegungen fallen, die diese Ausrichtung bewirken, auch solche, bei denen es keine wirkliche Schwenkachse gibt.

Eine vorteilhafte Ausgestaltung der Erfindung ist dadurch gekennzeichnet, daß die parallele Ausrichtung des Magnetkopfes im Bereich der Magnetspalte bezüglich der Durchzugsbahn des Magnetbandes in einer ersten Position dadurch erzielt wird, daß an der Chassisplatte erste Referenzelemente angeordnet sind, gegen die an der Magnetkopfhalterung angeordnete Positionierelemente gedrückt werden.

Durch die Ausrichtung des Magnetkopfes an Referenzelementen, die fest an der Chassisplatte angeordnet sind, wird eine sehr hohe Genauigkeit dieser Ausrichtung erzielt. Insbesondere ist diese Ausrichtung in der ersten Position unabhängig von der Stellung des Trägerelementes in der ersten Position, welche unvermeidbare Toleranzen aufweist.

Eine weitere vorteilhafte Ausgestaltung der Erfindung ist dadurch gekennzeichnet, daß das Trägerelement Führungsstifte aufweist, die in Langlöcher der Magnetkopfhalterung eingreifen oder daß das Trägerelement Langlöcher aufweist, in die Führungsstifte der Magnetkopfhalterung eingreifen.

Die Realisierung der verschwenkbaren und verschiebbaren Lagerung der Magnetkopfhalterung an dem Trägerelement mittels Führungsstiften, die in Langlöcher eingreifen, ist kostengünstig und einfach. Insbesondere ist hierbei an zwei Langlöcher gedacht, die mit zwei Führungsstiften zusammenarbeiten.

Eine weitere vorteilhafte Ausgestaltung der Erfindung ist dadurch gekennzeichnet, daß Trägerelement und Magnetkopfhalterung mittels Verspannungskräften gegeneinander verspannt sind.

Durch diese Verspannungskräfte wird es möglich, die Magnetkopfhalterung in einer festen Position zu positionieren, obwohl Führungsstifte und Langlöcher nicht aufeinander einwirken. Bei dieser Ausführungsform ist vorteilhaft vorgesehen, daß die Verspannung mittels einer Feder realisiert wird, die unter Abstützung an dem Trägerelement auf die Magnetkopfhalterung im-Wesentlichen eine Kraft in einer Richtung senkrecht zu der Durchzugsbahn des Magnetbandes ausübt.

Eine Verspannung mittels einer Feder läßt sich sehr einfach realisieren. Durch die Federbelastung der Magnetkopfhalterung in Richtung auf die Durchzugsbahn des Magnetbandes kann die Magnetkopfhalterung gegen Elemente der Chassisplatte, z.B. die ersten Referenzelemente, gedrückt werden, ohne daß die Führungsstifte eine wesentliche Kraft in einer Richtung senkrecht zu der Durchzugsbahn des Magnetbandes auf die Randbereiche der Langlöcher ausüben.

Eine weitere vorteilhafte Ausgestaltung dieser Ausführungsform ist dadurch gekennzeichnet, daß die parallele Ausrichtung des Magnetkopfes im Bereich der Magnetspalte bezüglich der Durchzugsbahn des Magnetbandes in einer zweiten Position dadurch erzielt wird, daß Endbereiche der Langlöcher der Magnetkopfhalterung infolge der Verspannung von Trägerelement und Magnetkopfhalterung gegen die Führungsstifte des Trägerelementes gedrückt werden.

In dieser zweiten Position wird die parallele Ausrichtung des Magnetkopfes durch die Stellung des Trägerelementes in dieser zweiten Position bzw. durch die an dem Trägerelement angeordneten Führungsstifte, gegen die die Endbereiche der Langlöcher der Magnetkopfhalterung gedrückt werden, bestimmt.

Nach einer weiteren Ausgestaltung der Erfindung ist vorgesehen, daß durch das Zusammenspiel von den an der Magnetkopfhalterung angeordneten Positionierelementen und den an der Chassisplatte angeordneten ersten Referenzelementen in der ersten und zweiten Position eine Höhenführung der Magnetkopfhalterung gegenüber der Chassisplatte gegeben ist.

Eine Höhenführung durch die an der Chassisplatte angeordneten ersten Referenzelemente läßt sich mit sehr hoher Genauigkeit realisieren. So ist es z.B. möglich, daß die an der Magnetkopfhalterung angeordneten Positionierelemente in Form von Fangschlitzen und die ersten Referenzelemente in Form von Stiften ausgebildet sind, welche in die Fangschlitze eingreifen.

Eine weitere vorteilhafte Ausgestaltung der Erfindung ist dadurch gekennzeichnet, daß die parallele Ausrichtung des Magnetkopfes im Bereich der Magnetspalte bezüglich der Durchzugsbahn des Magnetbandes in der ersten Position dadurch bestimmt wird, daß die an der Magnetkopfhalterung angeordneten Positionierelemente infolge der Verspannungskräfte zwischen Trägerelement und Magnetkopfhalterung gegen die an der Chassisplatte angeordneten ersten Referenzelemente gedrückt werden, wobei die an dem Trägerelement angeordneten, in die Langlöcher der Magnetkopfhalterung eingreifenden Führungsstifte auf die Endbereiche der Langlöcher der Magnetkopfhalterung nicht einwirken.

Dadurch, daß die Magnetkopfhalterung mit den an ihr angeordneten Positionierelementen infolge der Verspannungskräfte gegen die ersten Referenzelemente gedrückt wird, ist es nicht erforderlich, daß die Führungsstifte des Trägerelementes durch Einwirkung auf die Endbereiche der Langlöcher eine Kraft auf die Magnetkopfhalterung in Richtung auf die ersten Referenzelemente ausüben. Somit wird es möglich, daß sich die Führungsstifte des Trägerelementes und damit auch das Trägerelement selbst innerhalb der Abmessungen der Langlöcher der Magnetkopfhalterung frei bewegen können, ohne daß sich Magnetkopfhalterung und Magnetkopf aus der ersten Position heraus bewegen. Diese Konstruktion kann insbesondere bei Laufwerken vorteilhaft eingesetzt werden, die mit einem Musiksuchlaufsystem ausgestattet sind. Bei derartigen Systemen ist es erwünscht, daß der Magnetkopf im Musiksuchlaufbetrieb gegenüber der Position des Magnetkopfes im Spielbetrieb nur um einen sehr geringen Weg abgerückt ist, so daß der Magnetkopf das Magnetband noch leicht berührt und Aufzeichnungslücken auf dem Magnetband noch erkannt werden können. Gleichzeitig ist es bei einem derartigen System jedoch erforderlich, daß Andruckrollen, welche im Spielbetrieb gegen zugehörige Tonwellen gedrückt werden, für den Musiksuchlaufbetrieb genügend weit von den Tonwellen abrücken. Da bei vielen Laufwerken die Andruckrollen an dem Trägerelement angeordnet sind oder von der Bewegung des Trägerelementes gesteuert werden, bereitet es oft Probleme, eine genügend geringe Abrückung des Magnetkopfes von dem Magnetband bei gleichzeitig genügend großer Abrückung der Andruckrolle von der Tonwelle für den Musiksuchlaufbetrieb zu realisieren. Mit der erfindungsgemäßen Ausführungsform ist es möglich, daß die an dem Trägerelement angeordneten Stifte und damit auch das Trägerelement selbst beim Umschalten von normalem Spielbetrieb in den Musiksuchlaufbetrieb einen größeren Weg zurücklegen als Magnetkopfhalterung und Magnetkopf. Während Magnetkopfhalterung und Magnetkopf nur den kleinen, für die Bandabrückung notwendigen Weg zurücklegen, können die an dem Trägerelement angeordneten Führungsstifte und das Trägerelement einen um die Längsabmessungen der Langlöcher des Magnetkopfhalters der Magnetkopfhalterung längeren Weg zurücklegen und so für eine ausreichende Abrückung der Andruckrollen von den Tonwellen sorgen. Somit wird eine Entkopplung der Bewegung des Trägerelementes und der Druckrollen von der Bewegung des Magnetkopfes erreicht.

Eine weitere vorteilhafte Ausgestaltung der Erfindung ist dadurch gekennzeichnet, daß der Magnetkopf im Bereich der Magnetspalte in einer dritten Position parallel zu der Durchzugsbahn des Magnetbandes ausgerichtet ist und diese parallele Ausrichtung in der dritten Position durch ein an der Chassisplatte angeordnetes zweites Referenzelement und durch wenigstens einen Führungsstift des Trägerelementes, gegen den ein Endbereich eines Langloches der Magnetkopfhalterung gedrückt wird, bestimmt ist.

Eine weitere vorteilhafte Ausgestaltung der Erfindung ist dadurch gekennzeichnet, daß das Trägerelement um einen seitlich an der Chassisplatte gelegenen Drehpunkt drehbar gelagert ist und daß die Langlöcher der Magnetkopfhalterung unterschiedlich lang ausgebildet sind.

Magnetkopf und Magnetkopfhalterung werden durch Drehung des Trägerelementes um den seitlich an der Chassisplatte gelegenen Drehpunkt von der Spielposition in die Position für den Musiksuchlauf- bzw. Schnellspulbetrieb überführt. Dabei legen an dem Trägerelement angeordnete Führungsstifte, die unterschiedliche Abstände von dem Drehpunkt haben, verschieden lange Wege zurück. Um diese Wegunterschiede auszugleichen und im Musiksuchlaufbetrieb eine parallele Ausrichtung von Magnetkopfhalterung und Magnetkopf gegenüber der Durchzugsbahn des Magnetbandes zu ermöglichen, sind die Längsnuten der Magnetkopfhalterung unterschiedlich lang ausgebildet.

Eine weitere vorteilhafte Ausgestaltung der Erfindung ist dadurch gekennzeichnet, daß die Magnetkopfhalterung bei sich in die dritte Position drehendem Trägerelement infolge Einwirkung eines an der Chassisplatte angeordneten zweiten Referenzelementes auf einen Stellarm der Magnetkopfhalterung eine Verschwenkbewegung entgegen der Drehbewegung des Trägerelementes ausführt.

Diese dritte Position kann insbesondere für einen Wartebetrieb (Standby) bzw. als Auswurfstellung (Eject) eingesetzt werden. Für diese Betriebsstellung müssen Magnetkopfhalterung und Magnetkopf vollständig aus dem Wirkbereich der Magnetbandkassette herausgefahren sein, damit diese dem Magnetbandkassettengerät entnommen werden kann. Auch hier tritt bei einem seitlich an der Chassisplatte gelegenen Drehpunkt des Trägerelementes das Problem auf, daß die Bereiche von Magnetkopf und Magnetkopfhalterung, die auf der dem Drehpunkt des Trägerelementes zugewandten Seite liegen, bei Drehung des Trägerelementes von der ersten oder zweiten in die dritte Position eine geringere Abrückung von der Durchzugsbahn des Magnetbandes erfahren als die Bereiche, die auf der dem Drehpunkt des Trägerelementes abgewandten Seite der Magnetkopfhalterung und des Magnetkopfes liegen. Um diese unterschiedliche Abrückung von der Durchzugsbahn des Magnetbandes auszugleichen, führt die Magnetkopfhalterung infolge Einwirkung des an der Chassisplatte angeordneten zweiten Referenzelementes auf den Stellarm der Magnetkopfhalterung eine Verschwenkbewegung entgegen der Drehbewegung des Trägerelementes aus. Dadurch wird auch in der dritten Position im Bereich der Magnetspalte eine parallele Ausrichtung von Magnetkopf und Magnetkopfhalterung gegenüber der Durchzugsbahn des Magnetbandes erreicht.

Die erste Position wird vorteilhaft für die Betriebsstellung "Normaler Spielbetrieb" (Play), die zweite Position für die Betriebsstellung "Schnellauf" bzw. Musiksuchlauf" (MSS) und die dritte Position für die Betriebsstellung "Wartebetrieb" (Standby) oder "Auswurf" (Eject) verwendet.

Eine Ausführungsform der Erfindung wird nachfolgend anhand der Zeichnung in den Fig. 1 bis 6 näher erläutert. Es zeigen:
Fig. 1 eine perspektivische Ansicht auf Teile eines Laufwerkes eines Magnetbandkassettengerätes mit einem in einer Magnetkopfhalterung angeordneten Magnetkopf, wobei die Magnetkopfhalterung an einem an einer Chassisplatte drehbar angeordneten Trägerelement angeordnet ist und sich das Laufwerk in einer Spielstellung (Play) befindet,
Fig. 2 eine Draufsicht auf Teile des Laufwerkes mit Magnetkopf, Magnetkopfhalterung und Trägerelement in der Spielstellung gemäß Fig. 1,
Fig. 3 eine Draufsicht auf Teile des Laufwerkes mit Magnetkopf, Magnetkopfhalterung und Trägerelement in einer Schnellspul- oder Musiksuchlaufstellung (MSS),
Fig. 4 eine Draufsicht auf Teile des Laufwerkes mit Magnetkopf, Magnetkopfhalterung und Trägerelement in einer Auswurf- (Eject) oder Ruhestellung (Standby),
Fig. 5 in Seitenansicht einen Ausschnitt der Magnetkopfhalterung mit an der Magnetkopfhalterung angeordneten Positionierelementen, die mit an der Chassisplatte angeordneten Referenzelementen zusammenwirken, in der Spielstellung,
Fig. 6 in Seitenansicht einen Ausschnitt der Magnetkopfhalterung mit den an der Magnetkopfhalterung angeordneten Positionierelementen, die mit den in der Chassisplatte angeordneten Referenzelementen zusammenwirken, in der Stellung für Schnellspulbetrieb oder Musiksuchlauf.

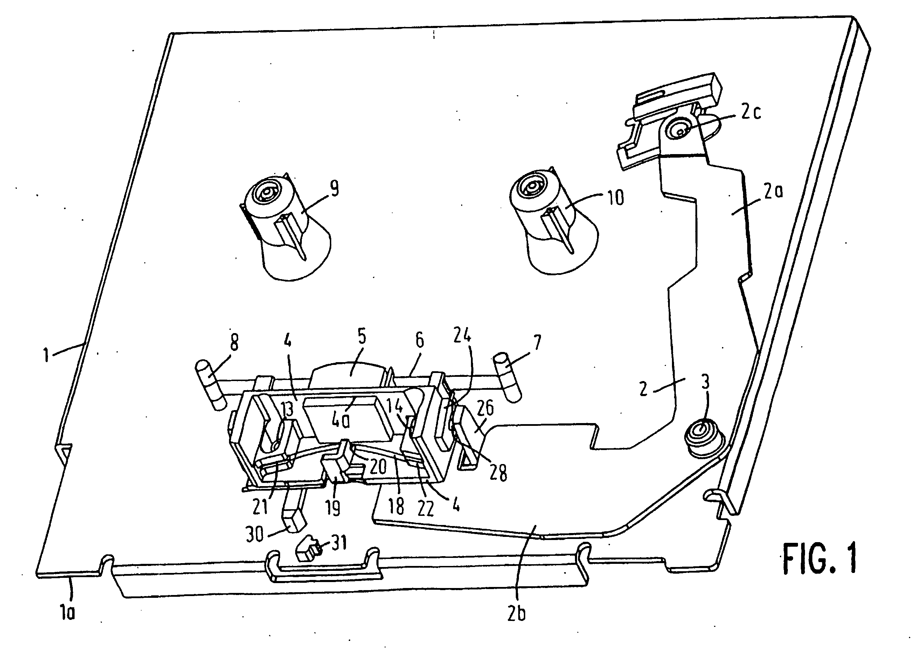

Das Laufwerk nach der Erfindung weist, wie in Fig. 1 dargestellt, eine Chassisplatte 1 auf, an der seitlich ein Trägerelement 2 um eine Drehachse 3 drehbar gelagert ist. Das Trägerelement 2 weist zwei Schenkel 2a und 2b sowie am Ende des Schenkels 2a einen Leitstift 2c auf. Dieser Leitstift 2c greift in eine nicht dargestellte Steuerkontur einer Steuerscheibe ein, welche die notwendigen Kräfte für das Verschwenken des Trägerelementes 2 auf den Leitstift 2c ausübt. Auf dem Trägerelement 2 ist eine Magnetkopfhalterung 4 "schwimmend" gelagert, welche eine Öffnung 4a aufweist, in der ein Magnetkopf 5 z.B. durch Einkleben oder Einklemmen angeordnet ist. Magnetkopf 5 und Magnetkopfhalterung 4 können durch Drehen des Trägerelementes 2 um die Drehachse 3 in Richtung auf eine Durchzugsbahn eines Magnetbandes 6 bewegt werden. Für den Transport des Magnetbandes 6 sind zwei Tonwellen 7 und 8 vorgesehen, gegen die zugehörige, nicht dargestellte Andruckrollen fahrbar sind. Zudem sind an der Chassisplatte 1 zwei Wickelteller 9 und 10 angeordnet, die in nicht dargestellte Wickelöffnungen einer nicht dargestellten Magnetbandkassette eingreifen können.

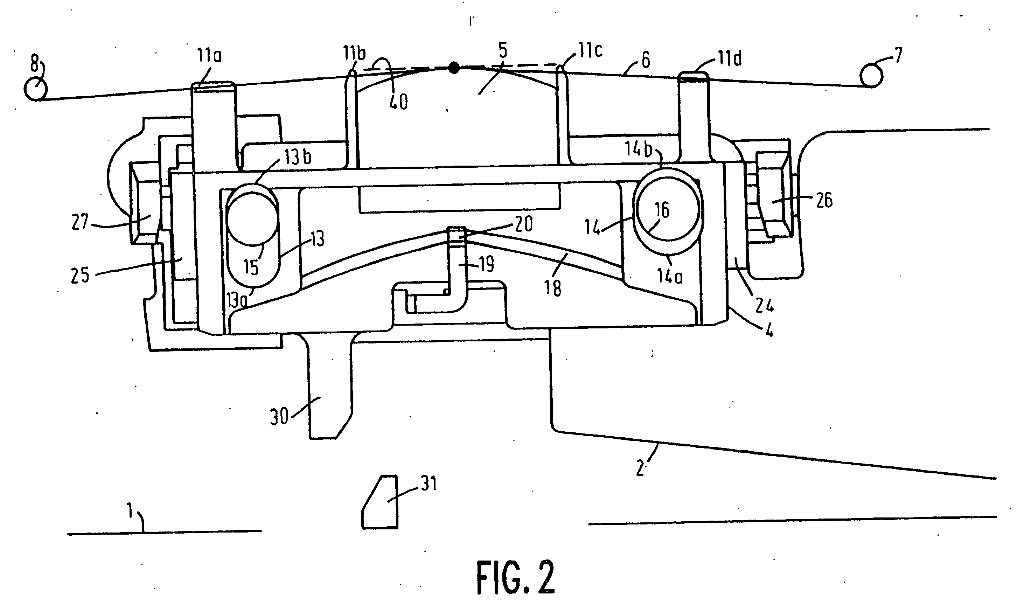

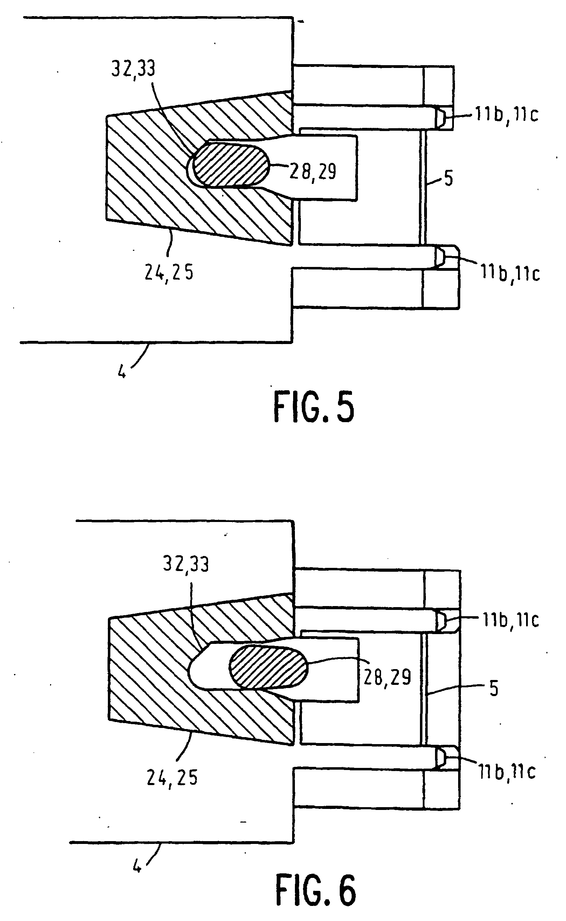

In der in Fig. 1 dargestellten Stellung befindet sich das Laufwerk in normalem Spielbetrieb (Play). Fig. 2 zeigt eine Draufsicht auf Magnetkopf 5, Magnetkopfhalterung 4 und Teile des Trägerelementes 2 in dieser Play-Position. Die Magnetkopfhalterung 4 weist vier vorstehende, die Durchzugsbahn des Magnetbandes 6 begrenzende Bandführungselemente 11a, 11b, 11c und 11d auf. Die Lagerung der Magnetkopfhalterung 4 auf dem Trägerelement 2 ist "schwimmend", d.h. es besteht keine starre Verbindung zwischen Magnetkopfhalterung 4 und Trägerelement 2. Hierfür weist die Magnetkopfhalterung 4 zwei Langlöcher 13 und 14 unterschiedlicher Länge auf, welche sich in Richtung auf die Durchzugsbahn des Magnetbandes 6 erstrecken. In diese Langlöcher 13 und 14 greifen an dem Trägerelement 2 angeordnete Führungsstifte 15 und 16 ein. Mittels dieser in die Langlöcher 13 und 14 eingreifenden Führungsstifte 15 und 16 ist eine seitliche Führung der Magnetkopfhalterung 4 gegenüber dem Trägerelement 2 vorgegeben. Ein Verschieben oder ein Verschwenken der Magnetkopfhalterung 4 gegenüber dem Trägerelement 2 ist jedoch innerhalb der Abmessungen der Langlöcher 13 und 14 möglich. Trägerelement 2 und Magnetkopfhalterung 4 sind mittels einer Drahtfeder 18 gegeneinander verspannt. Diese Drahtfeder 18 liegt in ihrer Mitte in einer Nut 20 eines an dem Trägerelement 2 angeordneten Abstützelementes 19 an und wird unter Abstützung an diesem Abstützelement 19 an ihren beiden Enden in Nuten 21 und 22 der Magnetkopfhalterung 4 gedrückt. An den beiden Seiten der Magnetkopfhalterung 4 befinden sich Positionierelemente 24 und 25, die als einseitig geöffnete Fangkonturen ausgebildet sind. Diese Positionierelemente 24 und 25 arbeiten mit fest an der Chassisplatte 1 angeordneten ersten Referenzelementen 26 und 27 zusammen. Die ersten Referenzelemente 26 und 27 weisen seitlich vorstehende Nasen 28 und 29 auf, welche in die als Fangkonturen ausgebildeten Positionierelemente 24 und 25 eingreifen können. Die Ausbildung der Positionierelemente 24 und 25 sowie der ersten Referenzelemente 26 und 27 ist in der in Fig. 5 dargestellten Seitenansicht erkennbar. Die Magnetkopfhalterung 4 weist an der dem Magnetkopf 5 gegenüberliegenden Seite einen Stellarm 30 auf, welches frei beweglich auf der Chassisplatte 1 aufliegt. Im Bereich der Vorderseite 1a der Chassisplatte 1 ist ein zweites Referenzelement 31 fest angeordnet.

Zunächst soll die Betriebsstellung Play, die in den Fig. 1, 2 und 5 dargestellt ist, näher erläutert werden: In dieser Play-Position drückt die Drahtfeder 18 unter Abstützung an dem Abstützelement 19 des Trägerelementes 2 die Positionierelemente 24 und 25 der Magnetkopfhalterung 4 gegen die Nasen 28 und 29 der ersten Referenzelemente 26 und 27. Die als einseitig geöffnete Fangkonturen ausgebildeten Positionierelemente 24 und 25 weisen an ihrem Ende Positionierschrägen 31 und 32 auf. Die Nasen 28 und 29 der ersten Referenzelemente 26 und 27 drücken in der Play-Position, wie in Fig. 5 erkennbar, gegen diese Positionierschrägen 31 und 32, wodurch es zu einer Verkeilung und damit zu einer spielfreien Positionierung der Magnetkopfhalterung 4 gegenüber den ersten Referenzelementen 26 und 27 und damit auch der Chassisplatte 1 kommt. Mittels der ersten Referenzelemente 26 und 27 sind damit zwei Referenzpunkte für die Magnetkopfhalterung 4 in der Play-Position festgelegt. Ein dritter Referenzpunkt wird durch den auf der Chassisplatte 1 aufliegenden Stellarm 30 festgelegt. Bezüglich der Chassisplatte 1 ist die Drahtfeder 18 tiefer angeordnet als die Nasen 28 und 29 der ersten Referenzelemente 26 und 27. Dadurch wirkt auf die Magnetkopfhalterung 4 ein Kippmoment in Richtung auf die Chassisplatte 1 ein, welches durch den auf der Chassisplatte 1 aufliegenden Stellarm 30 aufgefangen wird. Die an dem Trägerelement 2 angeordneten Führungsstifte 15 und 16, die in die Langlöcher 13 und 14 der Magnetkopfhalterung 4 eingreifen, haben auf die Position der Magnetkopfhalterung 4 im Play-Betrieb keinen Einfluß. Sie sind in der Play-Position derart angeordnet, daß sie die Endbereiche 13a und 13b bzw. 14a und 14b der Langlöcher 13 und 14 nicht berühren. Somit referieren sich in der Play-Position Magnetkopfhalterung 4 und Magnetkopf 5 ausschließlich an der Chassisplatte 1 bzw. an den Nasen 28 und 29 der an der Chassisplatte 1 fest angeordneten ersten Referenzelemente 26 und 27, jedoch nicht an dem Trägerelement 2. Dadurch ist eine sehr hohe Positionsgenauigkeit der Magnetkopfhalterung 4 und des Magnetkopfes 5 hinsichtlich der Eintauchtiefe in die nicht dargestellte Magnetbandkassette, hinsichtlich der Höhe gegenüber der Chassisplatte 1 sowie der Winkelstellung gegenüber dem Magnetband 6 erreichbar.

In der Play-Position ist der Magnetkopf 5 im Bereich der Magnetspalte etwa parallel zu der Durchzugsbahn des Magnetbandes 6 ausgerichtet. Hierunter wird verstanden, daß das Magnetband 6 im Bereich der Magnetspalte des Magnetkopfes 5 etwa parallel zu einer Tangentialebene 40 des Magnetkopfspiegels im Bereich der Magnetspalte vorbeigeführt wird.

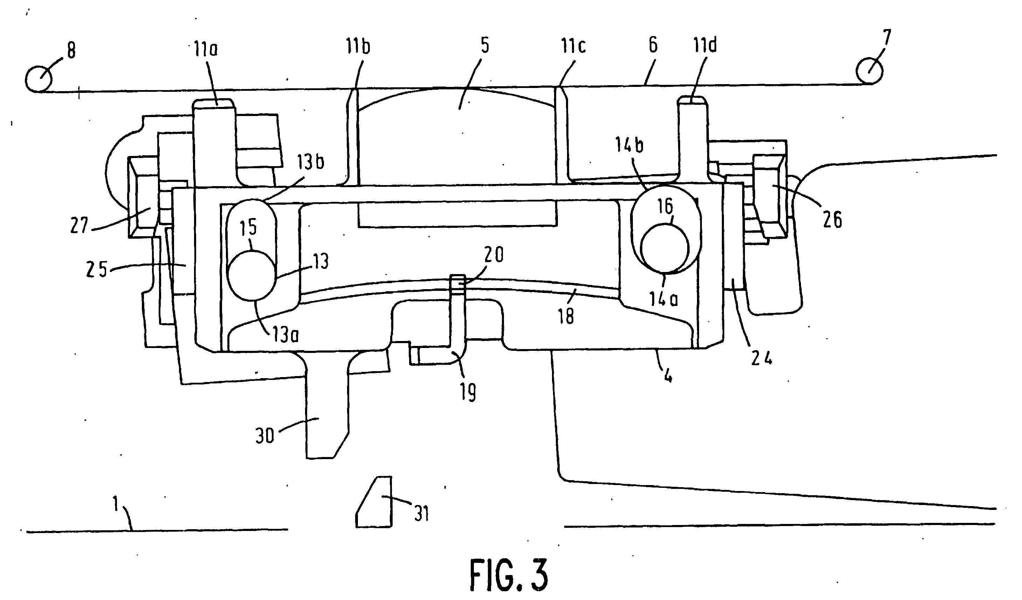

Nachfolgend wird der Übergang von der Play-Position in die in der in Fig. 3 in Draufsicht und in Fig. 6 in Seitenansicht dargestellte Betriebstellung "Schnellspulen" bzw. "Musiksuchlauf" (MSS) beschrieben, welche nachfolgend als MSS-Position bezeichnet wird:

Soll das Laufwerk von der Play-Position in die MSS-Position überführt werden, so verschwenkt das Trägerelement 2 im Gegenuhrzeigersinn um die Drehachse 3 und entfernt sich damit von der Durchzugsbahn des Magnetbandes 6. In einem ersten Winkelbereich dieses Verschwenkens behalten Magnetkopfhalterung 4 und Magnetkopf 5 ihre Play-Position bei. Sie bewegen sich zunächst nicht, da die Drahtfeder 18 die Positionierelemente 24 und 25 weiter gegen die Nasen 28 und 29 der ersten Referenzelemente 26 und 27 drückt. Erst wenn der Schwenkwinkel des Trägerelementes 2 so groß geworden ist, daß der rechte Führungsstift 16 gegen den Endbereich 14a des Langloches 14 drückt, wird die Stellung der Magnetkopfhalterung 4 und des Magnetkopfes 5 durch das Verschwenken des Trägerelementes 2 beeinflußt. Infolge der unterschiedlichen Länge der Langlöcher 13 und 14 drückt zunächst der rechte Führungsstift 16 gegen den Endbereich 14a des Langloches 14. Magnetkopfhalterung 4 und Magnetkopf 5 stellen sich daher zunächst schräg. Mit dem weiteren Verschwenken des Trägerelementes 2 drückt der linke Führungsstift 15 des Trägerelementes 2 gegen den Endbereich 13a des Langloches 13. Die unterschiedliche Länge der Langlöcher 13 und 14 ist so ausgelegt, daß die Magnetkopfhalterung 4 mit dem Magnetkopf 5 wieder parallel zu der Durchzugsbahn des Magnetbandes 6 steht, wenn das Trägerelement 2 vollständig in die MSS-Position verschwenkt ist. In dieser MSS-Position werden die Endbereiche 13a und 14a der Langlöcher 13 und 14 gegen die Führungsstifte 15 und 16 des Trägerelementes 2 gedrückt. Durch die unterschiedlichen Längen der Langlöcher 13 und 14 wird erreicht, daß Magnetkopfhalterung 4 und Magnetkopf 5 in der MSS-Position parallel zu der Durchzugsbahn des Magnetbandes 6 stehen, obwohl das Trägerelement 2 gegenüber der Play-Stellung verschwenkt ist. Wie in Fig. 6 erkennbar ist, werden die an der Magnetkopfhalterung 4 angeordneten Positionierelemente 24 und 25 in der MSS-Position von den Nasen 28 und 29 der ersten Referenzelemente 26 und 27 weiterhin in der Höhe geführt. Lediglich die parallele Ausrichtung von Magnetkopfhalterung 4 und Magnetkopf 5 gegenüber der Durchzugsbahn des Magnetbandes 6 wird durch die Führungsstifte 15 und 16 des Trägerelementes 2 bestimmt. Diese parallele Ausrichtung von Magnetkopfhalterung 4 und Magnetkopf 5 bezüglich der Durchzugsbahn des Magnetbandes 6 in der MSS-Position gewährleistet eine gute Funktionssicherheit des MSS-Betriebes. Beim Überführen des Laufwerkes von der Play-Position in die MSS-Position legen die an dem Trägerelement 2 fest angeordneten Führungsstifte 15 und 16 einen größeren Weg zurück als Magnetkopfhalterung 4 und Magnetkopf 5, da, wie bereits oben beschrieben, Magnetkopfhalterung 4 und Magnetkopf 5 sich in einem ersten Verschwenkbereich des Trägerelementes 2 noch nicht mitbewegen. Durch eine solche Konstruktion läßt sich folgendes Problem lösen: Für den Musiksuchlaufbetrieb darf sich der Magnetkopf nur um einen sehr kleinen Weg gegenüber der Play-Position bewegen, so daß das Magnetband 6 den Tonkopf 5 noch leicht berührt und Aufzeichnungspausen auf dem Magnetband 6 noch detektiert werden können. Gleichzeitig muß jedoch die im Play-Betrieb jeweils wirksame Andruckrolle von der zugehörigen Tonwelle 7 oder 8 so weit zurückfahren, daß das Magnetband 6 mittels der Wickelteller 9 und 10 zwischen den Tonwellen 7 und 8 und den zugehörigen Andruckrollen frei hindurchgezogen werden kann. Da die Andruckrollen vielfach auf dem Trägerelement 2 angeordnet sind, bereitet es oft Probleme, ein genügend großes Abrücken der jeweils wirksamen Andruckrolle von der zugehörigen Tonwelle in der MSS-Position zu gewährleisten. Bei dem vorliegenden Trägerelement ist insbesondere das Abrücken der nicht dargestellten rechten Andruckrolle von der rechten Tonwelle 7 kritisch, da diese Tonwelle 7 in der Nähe der Drehachse 3 des Trägerelementes 2 liegt und eine an dem Trägerelement 2 angeordnete Andruckrolle bei einem Verschwenken des Trägerelementes 2 von der Play-Position in die MSS-Position nur einen geringen Weg zurücklegt. Bei dem erfindungsgemäßen Laufwerk kann, wie beschrieben, das Trägerelement 2 beim Übergang von der Play-Position in die MSS-Position einen größeren Weg zurücklegen als Magnetkopf 5 und Magnetkopfhalterung 4, so daß ein ausreichend großes Abrücken einer nicht dargestellten, auf dem Trägerelement 2 angeordneten Andruckrolle gewährleistet werden kann.

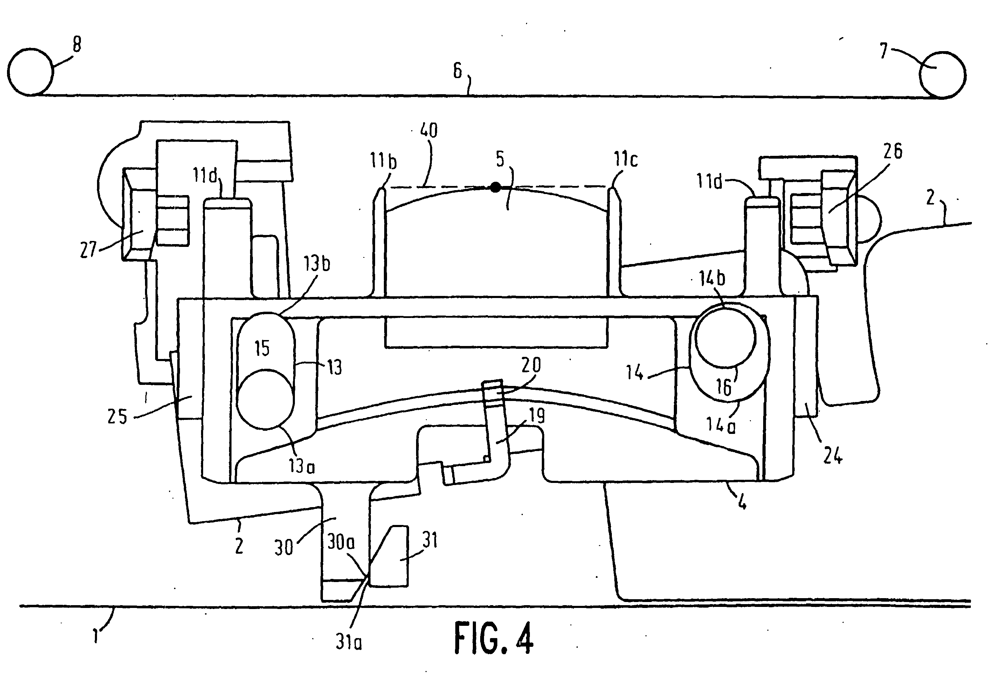

Soll das Laufwerk nun weiter in eine in Fig. 4 in Draufsicht dargestellte Ruhestellung (Standby), welche identisch einer Auswurfstellung (Eject) ist, überführt werden, so verschwenkt das Trägerelement 2 weiter im Gegenuhrzeigersinn um die Drehachse 3. Magnetkopf 5 und Magnetkopfhalterung 4 werden bei diesem Verschwenken des Trägerelementes 2 mitgenommen, indem die Führungsstifte 15 und 16 gegen die Endbereiche 13a und 14a der Langlöcher 13 und 14 drücken. Dabei nehmen Magnetkopf 5 und Magnetkopfhalterung 4 zunächst wieder eine schräge Stellung gegenüber der Durchzugsbahn des Magnetbandes 6 ein. Mit einem weiteren Verschwenken des Trägerelementes 2 drückt der Stellarm 30 der Magnetkopfhalterung 4 gegen das an der Chassisplatte 1 befestigte zweite Referenzelement 31, wodurch ein Verschwenken von Magnetkopfhalterung 4 und Magnetkopf 5 im Uhrzeigersinn erreicht wird. In der Standby- bzw. Eject-Position, die in Fig. 4 in Draufsicht dargestellt ist, drückt die rechte Kante 30a des Stellarmes 30 gegen die linke Kante 31a des zweiten Referenzelementes 31. Dadurch wird erreicht, daß Magnetkopfhalterung 4 und Magnetkopf 5 auch in der Standby- bzw. Eject-Position parallel zu der Durchzugsbahn des Magnetbandes 6 ausgerichtet sind.

In der Standby- bzw. Eject-Position müssen Magnetkopfhalterung 4 und Magnetkopf 5 vollständig aus der nicht dargestellten Magnetbandkassette herausgefahren sein, um ein Entnehmen der Magnetbandkassette aus dem Laufwerk zu ermöglichen. Da die Drehachse 3 des Trägerelementes 2 seitlich an der Chassisplatte 1 gelegen ist, tritt das Problem auf, daß die linke Seite der Magnetkopfhalterung mit den Bandführungselementen 11a und 11b bei dem Verschwenken des Trägerelementes 2 früher aus der Magnetbandkassette herausfährt als der rechte, der Drehachse 3 zugewandte Teil der Magnetkopfhalterung 4 mit den Bandführungselementen 11c und 11d. Dieser Unterschied wird durch das oben beschriebene Verschwenken von Magnetkopf 5 und Magnetkopfhalterung 4 im Uhrzeigersinn gegenüber dem Trägerelement 2 infolge der Einwirkung des zweiten Referenzelementes 31 auf den Stellarm 30 ausgeglichen. Somit wird der für ein vollständiges Herausfahren von Magnetkopfhalterung 4 und Magnetkopf 5 aus der Magnetbandkassette erforderliche Schwenkwinkel durch die beschriebene parallele Ausrichtung von Magnetkopfhalterung 4 und Magnetkopf 5 im Standby- bzw. Eject-Betrieb reduziert, da die "kritischen" Bandführungselemente 11c und 11d bei dem Parallelstellen der Magnetkopfhalterung 4 eine zusätzliche Drehbewegung im Uhrzeigersinn aus der Magnetbandkassette heraus erfahren.

Mit der vorliegenden Erfindung wird eine neue Lösung aufgezeigt, einen in einer Magnetkopfhalterung angeordneten Magnetkopf auf einem Trägerelement zu lagern. Die erfindungsgemäße "schwimmende" Lagerung erlaubt es, Magnetkopf und Magnetkopfhalterung in verschiedenen Betriebsstellungen, insbesondere im Play-, MSS- und Eject-Betrieb in gewünschter Weise gegenüber der Durchzugsbahn des Magnetbandes auszurichten. Die erfindungsgemäße "schwimmende" Lagerung ist nicht auf das in dem Ausführungsbeispiel beschriebene Trägerelement 2, welches seitlich an der Chassisplatte 1 um die Drehachse 3 angelagert ist, beschränkt. Vielmehr gestattet es diese "schwimmende" Lagerung, für verschiedenartigst gelagerte und bewegbare Trägerelemente eine parallele Ausrichtung von Magnetkopfhalterung und Magnetkopf gegenüber der Durchzugsbahn des Magnetbandes in verschiedenen Betriebsstellungen zu verwirklichen. Zudem ist es durch die verschiebbare Lagerung der Magnetkopfhalterung möglich, die Bewegung des Trägerelementes von der Bewegung des Magnetkopfes zu entkoppeln.

## Patentansprüche

1. Vorrichtung an einem Laufwerk für ein Magnetbandkassettengerät, wobei an einer Magnetkopfhalterung (4) ein Magnetkopf (5) angeordnet ist, wobei die Magnetkopfhalterung (4) an einem an einer Chassisplatte (1) angeordnetem Trägerelement (2) angeordnet ist und wobei der Magnetkopf (5) für verschiedene Betriebsstellungen in verschiedene Positionen bezüglich einer Durchzugsbahn eines Magnetbandes (6) bewegt werden kann, **dadurch gekennzeichnet,**
**daß** die Magnetkopfhalterung (4) an dem Trägerelement (2) derart in vorgebbaren Grenzen verschwenkbar und im wesentlichen in einer Richtung etwa senkrecht zu der Durchzugsbahn des Magnetbandes (6) verschiebbar gelagert ist, daß der Magnetkopf (5) im Bereich der Magnetspalte in wenigstens zwei Positionen im wesentlichen parallel zu der Durchzugsbahn des Magnetbandes (6) ausgerichtet ist.

2. Vorrichtung nach Anspruch 1, **dadurch gekennzeichnet,**
**daß** die parallele Ausrichtung des Magnetkopfes (5) im Bereich der Magnetspalte bezüglich der Durchzugsbahn des Magnetbandes (6) in einer ersten Position dadurch erzielt wird, daß an der Chassisplatte (1) erste Referenzelemente (26, 27) angeordnet sind, gegen die an der Magnetkopfhalterung (4) angeordnete Positionierelemente (24, 25) gedrückt werden.

3. Vorrichtung nach Anspruch 1 oder 2, **dadurch gekennzeichnet,**
**daß** das Trägerelement (2) Führungsstifte (15, 16) aufweist, die in Langlöcher (13, 14) der Magnetkopfhalterung eingreifen oder daß das Trägerelement Langlöcher aufweist, in die Führungsstifte der Magnetkopfhalterung eingreifen.

4. Vorrichtung nach einem der Ansprüche 1 bis 3, **dadurch gekennzeichnet,**
**daß** das Trägerelement (2) und die Magnetkopfhalterung (4) mittels Verspannungskräften gegeneinander verspannt sind.

5. Vorrichtung nach Anspruch 4, **dadurch gekennzeichnet,**
**daß** die Verspannung mittels einer Feder (18) realisiert wird, die unter Abstützung an dem Trägerelement (2) auf die Magnetkopfhalterung (4) im wesentlichen eine Kraft in einer Richtung etwa senkrecht zu der Durchzugsbahn des Magnetbandes (6) ausübt.

6. Vorrichtung nach Anspruch 4 oder 5, **dadurch gekennzeichnet,**
**daß** die parallele Ausrichtung des Magnetkopfes (5) im Bereich der Magnetspalte bezüglich der Durchzugsbahn des Magnetbandes (6) in einer zweiten Position dadurch erzielt wird, daß Endbereiche (13a, 14a) der Langlöcher (13, 14) der Magnetkopfhalterung (4) infolge der Verspannung von dem Trägerelement (2) und der Magnetkopfhalterung (4) gegen die Führungsstifte (15, 16) des Trägerelementes (2) gedrückt werden.

7. Vorrichtung nach einem der Ansprüche 2 bis 6, **dadurch gekennzeichnet,**
**daß** durch das Zusammenspiel von den an der Magnetkopfhalterung (4) angeordneten Positionierelementen (24, 25) und den an der Chassisplatte (1) angeordneten ersten Referenzelementen in der ersten und zweiten Position eine Höhenführung der Magnetkopfhalterung (4) gegenüber der Chassisplatte (1) gegeben ist.

8. Vorrichtung nach einem der Ansprüche 4 bis 7, **dadurch gekennzeichnet,**
**daß** die parallele Ausrichtung des Magnetkopfes (5) im Bereich der Magnetspalte bezüglich der Durchzugsbahn des Magnetbandes (6) in der ersten Position dadurch bestimmt wird, daß die an der Magnetkopfhalterung (4) angeordneten Positionierelemente (24, 25) mittels der Verspannungskräfte zwischen Trägerelement (2) und Magnetkopfhalterung (4) gegen die an der Chassisplatte (1) angeordneten ersten Referenzelemente (26, 27) gedrückt werden, wobei die an dem Trägerelement (2) angeordneten, in die Langlöcher (13, 14) der Magnetkopfhalterung (4) eingreifenden Führungsstifte (15, 16) auf die Endbereiche (13a, 13b, 14a, 14b) der Langlöcher (13, 14) der Magnetkopfhalterung (4) nicht einwirken.

9. Vorrichtung nach einem der Ansprüche 1 bis 8, **dadurch gekennzeichnet,**
**daß** der Magnetkopf (5) in einer dritten Position parallel zu der Durchzugsbahn des Magnetbandes (6) ausgerichtet ist und diese parallele Ausrichtung in der dritten Position durch ein an der Chassisplatte (1) angeordnetes zweites Referenzelement (31) und durch wenigstens einen Führungsstift (15) des Trägerelementes (2), gegen den ein Endbereich (13a) eines Langloches (13) der Magnetkopfhalterung (4) gedrückt wird, bestimmt ist.

10. Vorrichtung nach einem der Ansprüche 1 bis 9, **dadurch gekennzeichnet,**
**daß** das Trägerelement (2) um eine seitlich an der Chassisplatte (1) gelegene Drehachse (3) drehbar gelagert ist und daß die Langlöcher (13, 14) der Magnetkopfhalterung (4) unterschiedlich lang ausgebildet sind.

11. Vorrichtung nach Anspruch 10, **dadurch gekennzeichnet,**
**daß** die Magnetkopfhalterung (4) bei sich in die dritte Position drehendem Trägerelement (2) infolge Einwirkung des an der Chassisplatte (1) angeordneten zweiten Referenzelementes (31) auf einen Stellarm (30) der Magnetkopfhalterung (4) eine Verschwenkbewegung entgegen der Drehbewegung des Trägerelementes (2) ausführt.

12. Vorrichtung nach einem der Ansprüche 2 bis 11, **dadurch gekennzeichnet,**
**daß** die erste Position für die Betriebsstellung "Normaler Spielbetrieb" (Play), die zweite Position für die Betriebsstellung "Schnellauf" bzw. "Musiksuchlauf" (MSS) und die dritte Position für die Betriebsstellung "Wartebetrieb" (Stand-By) oder "Auswurf" (Eject) verwendet wird.

13. Laufwerk mit einer Vorrichtung nach einem der der Ansprüche 1 bis 12.

14. Magnetbandkassettengerät mit einem Laufwerk mit einer Vorrichtung nach einem der Ansprüche 1 bis 12.

## Claims

1. A device in a tape deck for a magnetic-tape-cassette apparatus, in which a magnetic head (5) is mounted on a magnetic-head mount (4), in which the magnetic-head mount (4) is arranged on a carrier element (2) mounted on a deck plate (1), and in which the magnetic head (5) is movable in different positions relative to a transport path of a magnetic tape (6) for different modes of operation, **characterized in that**
the magnetic-head mount (4) is supported on the carrier element (2) so as to be pivotable within given limits and so as to be movable substantially in a direction approximately perpendicular to the transport path of the magnetic tape (6) such that the magnetic head (5) is in a substantially parallel alignment relative to the transport path of the magnetic tape (6) in at least two positions at the location of the transducing gap.

2. A device as claimed in Claim 1, **characterized in that**
the parallel alignment of the magnetic head (5) relative to the transport path of the magnetic tape (6) at the location of the transducing gap in a first position is achieved **in that** first reference elements (26, 27) are arranged on the deck plate (1), positioning elements (24, 25) arranged on the magnetic-head mount (4) being urged against said reference elements.

3. A device as claimed in Claim 1 or 2, **characterized in that**
the carrier element (2) comprises guide pins (15, 16) which engage in slots (13, 14) in the magnetic-head mount, or the carrier element has slots in which guide pins of the magnetic-head mount engage.

4. A device as claimed in any one of the Claims 1 to 3, **characterized in that**
the carrier element (2) and the magnetic-head mount (4) are restrained relative to one another by means of restraining forces.

5. A device as claimed in Claim 4, **characterized in that**
restraining is effected by means of a spring (18) which, while being braced against the carrier element (2), subjects the magnetic-head mount (4) essentially to force in a direction approximately perpendicular to the transport path of the magnetic tape (6).

6. A device as claimed in Claim 4 or 5, **characterized in that**
the parallel alignment of the magnetic head (5) relative to the transport path of the magnetic tape (6) at the location of the transducing gap in a second position is achieved **in that** end walls (13a, 14a) of the slots (13, 14) in the magnetic-head mount (4) are urged against the guide pins (15, 16) of the carrier element (2) as a result of the restraint between the carrier element (2) and the magnetic-head mount (4).

7. A device as claimed in any one of the Claims 2 to 6, **characterized in that**
a guidance of the magnetic-head mount (4) in the height direction relative to the deck plate (1) in the first and the second position is obtained by the cooperation of the positioning elements (24, 25) arranged on the magnetic-head mount (4) and the first reference elements arranged on the deck plate (1).

8. A device as claimed in any one of the Claims 4 to 7, **characterized in that**
the parallel alignment of the magnetic head (5) relative to the transport path of the magnetic tape (6) at the location of the transducing gap in the first position is achieved **in that** the positioning elements (24, 25) arranged on the magnetic-head mount (4) are urged against the first reference elements (26, 27) arranged on the deck plate (1) by means of the restraining forces between the carrier element (2) and the magnetic-head mount (4), the guide pins (15, 16) arranged on the carrier element (2) and engaging the slots (13, 14) in the magnetic-head mount (4) not acting on the end walls (13a, 13b, 14a, 14b) of the slots (13, 14) in the magnetic-head mount (4).

9. A device as claimed in any one of the Claims 1 to 8, **characterized in that**
the magnetic head (5) is in parallel alignment relative to the transport path of the magnetic tape (6) in a third position, and this parallel alignment in the third position is determined by a second reference element (31) arranged on the deck plate (1) and by at least one guide pin (15) of the carrier element (2) against which an end wall (13a) of a slot (13) in the magnetic-head mount (4) is urged.

10. A device as claimed in any one of the Claims 1 to 9, **characterized in that**
the carrier element (2) is pivotable about a pivot (3) disposed at the periphery of the deck plate (1), and the slots (13, 14) in the magnetic-head mount (4) have different lengths.

11. A device as claimed in Claim 10, **characterized in that**,
during the pivotal movement of the carrier element (2) in the third position, the magnetic-head mount (4) performs a pivotal movement opposed to the pivotal movement of the carrier element (2) as a result of the action of the second reference element (31) arranged on the deck plate (1) upon an actuating arm (30) of the magnetic-head mount (4).

12. A device as claimed in any one of the Claims 2 to 11, **characterized in that** the first position is used for the "normal play" mode (Play), the second position is used for the "fast winding" or "music search" (MSS) mode, and the third position is used for the "standby" mode (Stand-By) or the "eject" mode (Eject).

13. A tape deck including a device as claimed in any one of the Claims 1 to 12.

14. A magnetic tape cassette apparatus including a tape deck comprising a device as claimed in any one of the Claims 1 to 12.

## Revendications

1. Dispositif sur un mécanisme d'entraînement pour un appareil à cassette à bande magnétique, une tête magnétique (5) étant disposée sur un support de tête magnétique (4), la fixation de tête magnétique (4) étant disposé sur un élément de support (2) disposé sur une plaque de châssis (1) et la tête magnétique (5) pouvant être déplacée pour différentes positions de fonctionnement dans différentes positions par rapport à une piste d'entraînement d'une bande magnétique (6), **caractérisé en ce que** la fixation de tête magnétique (4) est logée à pivotement sur l'élément de support (2) dans des limites préalablement déterminées et à coulissement essentiellement dans une direction presque perpendiculaire à la piste d'entraînement de la bande magnétique (6) de telle sorte que la tête magnétique (5) soit orientée dans la région de l'entrefer dans au moins deux positions essentiellement parallèles à la piste d'entraînement de la bande magnétique (6).

2. Dispositif selon la revendication 1, **caractérisé en ce**
**que** l'orientation parallèle de la tête magnétique (5) est obtenue dans la région de l'entrefer par rapport à la piste d'entraînement de la bande magnétique (6) dans une première position par le fait que des premiers éléments de référence (26, 27) contre lesquels sont pressés les éléments de positionnement (24, 25) disposés sur la fixation de tête magnétique (4) sont disposés sur la plaque de châssis (1).

3. Dispositif selon l'une des revendications 1 ou 2, **caractérisé en ce**
**que** l'élément de support (2) présente des broches de guidage (15, 16) qui entrent en prise dans des orifices longitudinaux (13, 14) du support de tête magnétique ou que l'élément de support présente des orifices longitudinaux dans lesquels entrent en prise les broches de guidage du support de tête magnétique.

4. Dispositif selon l'une des revendications 1 à 3, **caractérisé en ce**
**que** l'élément de support (2) et la fixation de tête magnétique (4) sont serrés l'un contre l'autre à l'aide de forces de serrage.

5. Dispositif selon la revendication 4, **caractérisé en ce**
**que** le serrage est réalisé à l'aide d'un ressort (18) qui, en s'appuyant sur l'élément de support (2), exerce sur la fixation de tête magnétique (4) essentiellement une force dans une direction presque perpendiculaire à la piste d'entraînement de la bande magnétique (6).

6. Dispositif selon l'une des revendications 4 ou 5, **caractérisé en ce**
**que** l'orientation parallèle de la tête magnétique (5) dans la région de l'entrefer par rapport à la piste d'entraînement de la bande magnétique (6) est obtenue dans une deuxième position par le fait que des zones d'extrémité (13a, 14a) des orifices longitudinaux (13, 14) de la fixation de tête magnétique (4) sont pressées contre les broches de guidage (15, 16) de l'élément de support (2) en raison du serrage de l'élément de support (2) et de la fixation de tête magnétique (4).

7. Dispositif selon l'une des revendications 2 à 6, **caractérisé en ce**
**qu'**un guidage en hauteur de la fixation de tête magnétique (4) est obtenu par rapport à la plaque de châssis (1) par le concours des éléments de positionnement (24, 25) disposés sur la fixation de tête magnétique (4) et les premiers éléments de référence disposés sur la plaque de châssis (1) dans les première et deuxième positions.

8. Dispositif selon l'une des revendications 4 à 7, **caractérisé en ce**
**que** l'orientation parallèle de la tête magnétique (5) est déterminée dans la région de l'entrefer par rapport à la piste d'entraînement de la bande magnétique (6) dans la première position par le fait que les éléments de positionnement (24, 25) disposés sur la fixation de tête magnétique (4) sont pressés à l'aide des forces de serrage entre l'élément de support (2) et la fixation de tête magnétique (4) contre les premiers éléments de référence (26, 27) disposés sur la plaque de châssis (1), les broches de guidage (15, 16) entrant en prise dans les orifices longitudinaux (13, 14) de la fixation de tête magnétique (4) et étant disposées sur l'élément de support (2) n'agissant pas encore sur les zones d'extrémité (13a, 13b, 14a, 14b) des orifices longitudinaux (13, 14) de la fixation de tête magnétique (4).

9. Dispositif selon l'une des revendications (1 à 8) **caractérisé en ce**
**que** la tête magnétique (5) est orientée dans une troisième position parallèle à la piste d'entraînement de la bande magnétique (6) et cette orientation parallèle dans la troisième position est déterminée par un deuxième élément de référence (31) disposé sur la plaque de châssis (1) et par au moins une broche de guidage (15) de l'élément de support (2) contre lequel une zone d'extrémité (13a) d'un orifice longitudinal (13) de la fixation de tête magnétique (4) est pressée.

10. Dispositif selon l'une des revendications 1 à 9, **caractérisé en ce**
**que** l'élément de support (2) est logé à rotation autour d'un axe de rotation (3) situé latéralement sur la plaque de châssis (1) et que les orifices longitudinaux (13, 14) de la fixation de tête magnétique (4) sont conçus de longueur différente.

11. Dispositif selon la revendication 10, **caractérisé en ce**
**que** la fixation de tête magnétique (4) pour l'élément de support (2) tournant dans la troisième position en raison de l'action du deuxième élément de référence (31) disposé sur la plaque de châssis (1) sur un bras de réglage (30) de la fixation de tête magnétique (4) exerce un mouvement de pivotement dans le sens contraire du mouvement de rotation de l'élément de support (2).

12. Dispositif selon l'une des revendications 2 à 11, **caractérisé en ce**
**que** la première position est utilisée pour le mode de fonctionnement « lecture normale » (Play), la deuxième position pour le mode de fonctionnement « avance rapide » ou « recherche musicale » (MSS) et la troisième position pour le mode de fonctionnement « mode d'attente » (Stand-by) ou « éjection » (Eject).

13. Mécanisme d'entraînement avec un dispositif selon l'une des revendications 1 à 12.

14. Appareil à cassette à bande magnétique avec un mécanisme d'entraînement doté d'un dispositif selon l'une des revendications 1 à 12.
